# EUROPEAN PATENT APPLICATION

(11) **EP 4 292 917 A1**
(43) Date of publication of application: **20.12.2023**
(21) Application number: 23176020.8
(22) Date of filing: 30.05.2023
(51) Int. Cl.: B62J 29/00

(54) **SIDE MIRROR AND STRADDLED VEHICLE HAVING THE SAME**

(30) Priority: 15.06.2022 JP 2022096774
(71) Applicant: YAMAHA HATSUDOKI KABUSHIKI KAISHA, Iwata-shi, Shizuoka 438-8501 (JP)
(72) Inventor: IKEGAYA, Ryosuke, Iwata-shi, 4388501 (JP)
(74) Representative: Studio Torta S.p.A.

(57) **Abstract**

There is disclosed a side mirror (**20**) including: a rod-shaped mirror stay (**23**); an adapter (**24**) that connects together the mirror stay (**23**) and a handle (**11**); and an elastically deformable tubular cap (**25**) that covers the adapter (**24**).; a cross-sectional shape of a middle portion (**33**) of the mirror stay (**23**) being different from a cross-sectional shape of a base portion (**31**); the cap (**25**) including a first tubular portion (**51**) having a first inner diameter **D51** provided in a distal portion (**25t**), and a second tubular portion (**52**) having a second inner diameter **D52** larger than the first inner diameter **D51**; the first inner diameter **D51** being smaller than an outer diameter **D31** of the base portion (**31**) of the mirror stay (**23**).

## Description

### Technical field

The present invention relates to a side mirror and a straddled vehicle having the same.

### Prior Art

Side mirrors have been provided on the handle of a straddled vehicle such as a motorcycle (see, for example, JP 2009-67283 A). A side mirror to be provided on the handle that has been known in the art includes a mirror housing with a mirror attached thereto, a rod-shaped mirror stay supporting the mirror housing, an adapter for connecting the mirror stay to the handle, and a rubber cap covering the base portion of the mirror stay and the adapter.

When replacing the side mirror, for example, the cap is slid from the base portion of the mirror stay toward the middle portion to expose the adapter. Then, the nut securing the adapter is loosened, and the side mirror is removed from the handle. After the new side mirror is attached to the handle, the nut is tightened and the cap is slid from the middle portion of the mirror stay toward the base portion of the mirror stay. Thus, the cap covers the base portion of the mirror stay and the adapter.

When the mirror stay is formed in a columnar shape with a constant outer diameter and the cap is formed in a cylindrical shape with a constant inner diameter, it is relatively easy to slide the cap from the base portion of the mirror stay to the middle portion of the mirror stay. When the mirror stay is formed in a columnar shape with a constant outer diameter and the cap is formed in a cylindrical shape with a constant inner diameter, the gap between the cap and the mirror stay inconspicuous even if the inner diameter of the cap is slightly larger than the outer diameter of the mirror stay. Therefore, by making the inner diameter of the cap slightly larger than the outer diameter of the mirror stay, it is easier to slide the cap along the mirror stay.

However, if the cross-sectional shape of the mirror stay varies along the axial direction, the cap deforms when the cap is moved along the mirror stay. If the cap is formed in a cylindrical shape with a constant inner diameter, it is not easy to move the cap along the mirror stay. To make it easy to move the cap, one may consider increasing the inner diameter of the cap. However, if the inner diameter of the cap is large, the gap between the cap and the mirror stay will be conspicuous.

### Description of the invention

The present invention has been made in view of such a problem, and an object thereof is to provide a side mirror including a mirror stay whose cross-sectional shape varies along the axial direction, wherein the cap can be moved along the mirror stay, and the gap between the mirror stay and the cap is inconspicuous, and a straddled vehicle having such a side mirror.

A side mirror disclosed herein includes: a mirror housing to which a mirror is attached; a rod-shaped mirror stay that supports the mirror housing; an adapter that connects together the mirror stay and a handle; and an elastically deformable tubular cap into which the mirror stay and the adapter are inserted, wherein the cap covers the adapter. The mirror stay includes a base portion to which the adapter is connected, a distal portion connected to the mirror housing, and a middle portion located between the base portion and the distal portion. A cross-sectional shape of the middle portion of the mirror stay is different from a cross-sectional shape of the base portion. The cap includes a base portion, a distal portion located closer to the mirror stay than the base portion, a first tubular portion having a first inner diameter provided in the distal portion, and a second tubular portion having a second inner diameter larger than the first inner diameter. The first inner diameter is smaller than an outer diameter of the base portion of the mirror stay.

With the side mirror described above, while the cross-sectional shape of the mirror stay varies along the axial direction, the first tubular portion having an inner diameter smaller than the outer diameter of the base portion of the mirror stay is provided in the distal portion of the cap. Therefore, when the cap is attached, the gap between the mirror stay and the cap is inconspicuous. It is possible to prevent water or dust from entering through the gap. The cap includes a second tubular portion having an inner diameter (the second inner diameter) larger than the inner diameter (the first inner diameter) of the first tubular portion. When the cap is moved along the mirror stay, the cap is likely to elastically deform to conform to the cross-sectional shape of the mirror stay. Thus, it is easy to move the cap along the mirror stay.

The second inner diameter may be larger than the outer diameter of the base portion of the mirror stay.

Thus, it is easy to move the cap along the mirror stay.

The cap may include: a third tubular portion that is located between the first tubular portion and the second tubular portion and that has a third inner diameter smaller than the second inner diameter; and a fourth tubular portion that is located between the first tubular portion and the third tubular portion and that has a fourth inner diameter larger than the first inner diameter and larger than the third inner diameter.

Thus, with the cap including the third tubular portion, it is possible to further decrease the gap between the mirror stay and the cap. Therefore, it is possible to more reliably prevent water or dust entering through the gap.

The first tubular portion may include a semi-circular portion protruding inward in a radial direction.

Thus, it is easy to move the cap along the mirror stay.

The cap may include a fifth tubular portion provided in the base portion. The fifth tubular portion may include a recessed portion that is recessed in a direction parallel to an axial direction of the cap.

Thus, by engaging the recessed portion of the fifth tubular portion with the protruding portion of the handle, it is possible to prevent the cap from rotating.

The cap may include a fifth tubular portion provided in the base portion, and a bottom surface provided between the second tubular portion and the fifth tubular portion and extending in a radial direction and in a circumferential direction. The bottom surface may be inclined relative to an axial direction of the cap.

Thus, by aligning the bottom surface of the cap with the inclined surface of the handle, it is possible to prevent the cap from rotating about the axis.

An inner diameter of the fifth tubular portion may be smaller than the second inner diameter.

The cap may be made of rubber.

A cross-sectional shape of the middle portion of the mirror stay may be an oblong circular shape.

A straddled vehicle disclosed herein includes the side mirror described above.

According to the present invention, it is possible to provide a side mirror including a mirror stay whose cross-sectional shape varies along the axial direction, wherein the cap can be moved along the mirror stay, and the gap between the mirror stay and the cap is inconspicuous, and a straddled vehicle having such a side mirror.

### Brief description of the drawings

FIG. **1** is a left side view of a motorcycle according to an embodiment;
FIG. **2** is a view of a handle and side mirrors as viewed from the rearward of the vehicle;
FIG. **3** is a view of a left side mirror as viewed from the rearward of the vehicle;
FIG. **4** is an enlarged view of a base portion of the side mirror;
FIG. **5** is a cross-sectional view of the base portion of the side mirror;
FIG. **6** is a cross-sectional view taken along line VI-VI of FIG. **3**;
FIG. **7** is a cross-sectional view taken along line VII-VII of FIG. **3**;
FIG. **8** is a cross-sectional view taken along line VIII-VIII of FIG. **3**;
FIG. **9** is a perspective view of a cap;
FIG. **10** is a front view of the cap;
FIG. **11** is a cross-sectional view taken along line XI-XI of FIG. **10**;
FIG. 12(a) is a partial cross-sectional view of the cap before the cap is placed over the mirror stay and the adapter, and FIG. 12(b) is a partial cross-sectional view of the cap and the mirror stay when the cap is placed on the mirror stay and the adapter;
FIG. 13(a) and FIG. 13(b) are equivalent to FIG. 12(a) and FIG. 12(b) for another embodiment;
FIG. 14(a) and FIG. 14(b) are equivalent to FIG. 12(a) and FIG. 12(b) for another embodiment; and
FIG. 15(a) and FIG. 15(b) are equivalent to FIG. 12(a) and FIG. 12(b) for another embodiment.

### Embodiments of the invention

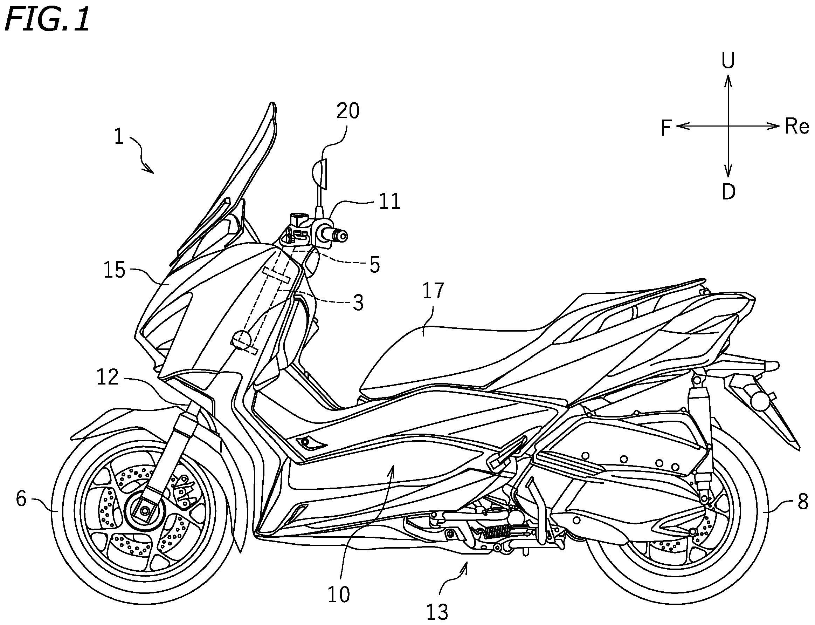

An embodiment of a side mirror and a straddled vehicle will now be described with reference to the drawings. FIG. **1** is a left side view of a motorcycle **1**, which is an example of the straddled vehicle.

The terms front, rear, left, right, up and down, as used in the description below, refer to these directions as viewed from a virtual rider seated on a seat **17** while the motorcycle **1** is standing upright on a horizontal surface with no rider and no load thereon, unless specified otherwise. The designations F, Re, L, R, U and D, as used in the figures, refer to front, rear, left, right, up and down, respectively.

The motorcycle **1** includes a vehicle body **10**, the seat **17** on which the rider is seated, a drive source **13** for traveling, a front wheel **6**, a rear wheel **8**, and left and right side mirrors **20**.

The vehicle body **10** includes a vehicle body frame (not shown) having a head pipe **3**, a steering shaft **5** supported on the head pipe **3** so that the steering shaft **5** can rotate left and right, and a handle **11** fixed to the steering shaft **5**. The handle **11** is arranged upward of the head pipe **3.** A front cover **15** is arranged forward of the head pipe **3**.

The vehicle body **10** includes a front fork **12** fixed to the steering shaft **5**. The front wheel **6** is supported by the front fork **12.** The drive source **13** includes an internal combustion engine or an electric motor. The drive source **13** is supported by the vehicle body frame. The rear wheel **8** is linked to the drive source **13**. The rear wheel **8** is driven by the drive source **13**. The seat **17** is arranged upward relative to the front wheel **6** and the rear wheel **8**.

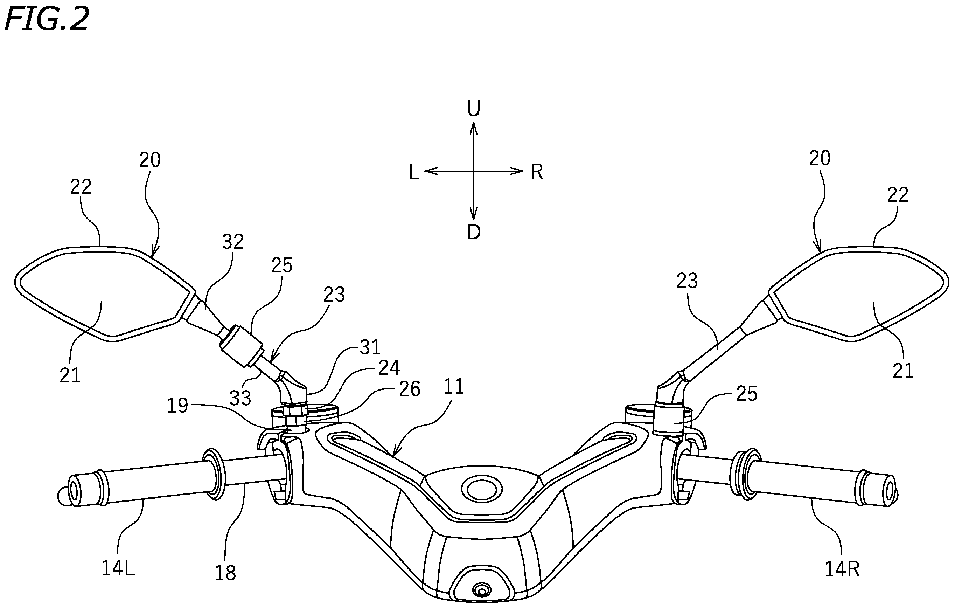

FIG. **2** is a view of the handle **11** and the side mirrors **20** as viewed from the rearward of the vehicle. The handle **11** includes a handle bar **18** extending left and right, a left grip **14L** provided on the left end portion of the handle bar **18**, and a right grip **14R** provided on the right end portion of the handle bar **18**. The left and right side mirrors **20** are attached to the handle bar **18**. The left side mirror **20** is arranged leftward relative to the vehicle center and rightward relative to the left grip **14L**. The right side mirror **20** is arranged rightward relative to the vehicle center and leftward relative to the right grip **14R**. The left side mirror **20** and the right side mirror **20** have shapes in left-right symmetry. The left side mirror **20** will be described below while omitting the description of the right side mirror **20**.

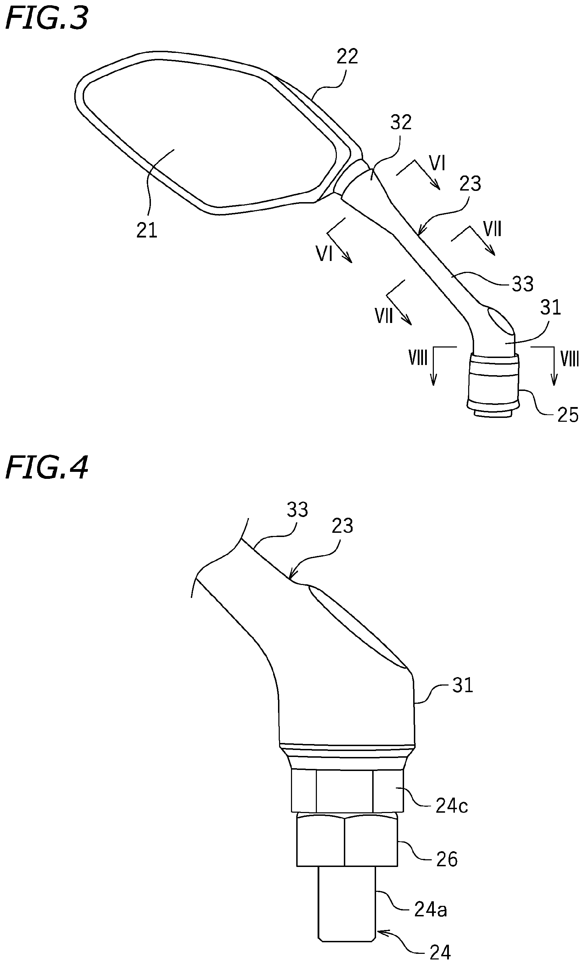

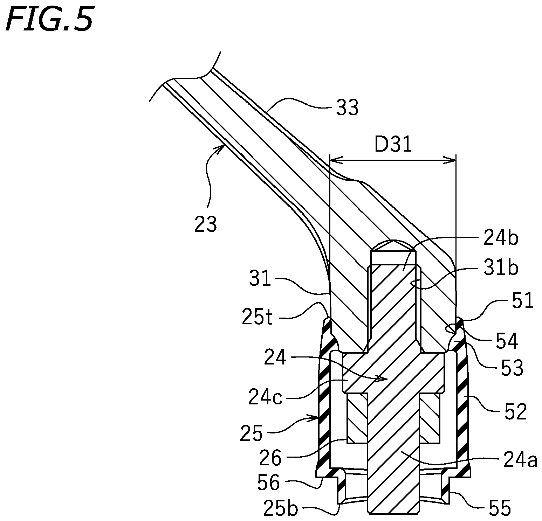

As shown in FIG. **3**, the side mirror **20** includes a mirror housing **22** to which a mirror **21** is attached, a rod-shaped mirror stay **23** supporting the mirror housing **22**, a rod-shaped adapter **24** connecting together the mirror stay **23** and the handle **11** (not shown in FIG. **3**; see FIG. **4**), and an elastically deformable tubular cap **25** that covers the adapter **24**. While there is no particular limitation on the material of the cap **25** as long as it is an elastically deformable material, the cap **25** is made of rubber in the present embodiment. As shown in FIG. **5**, the mirror stay **23** and the adapter **24** are inserted into the cap **25**.

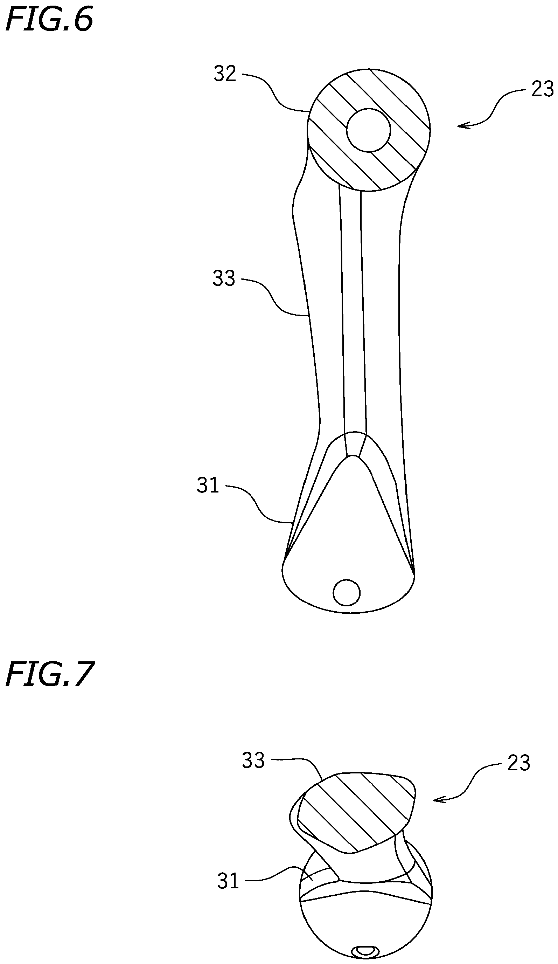

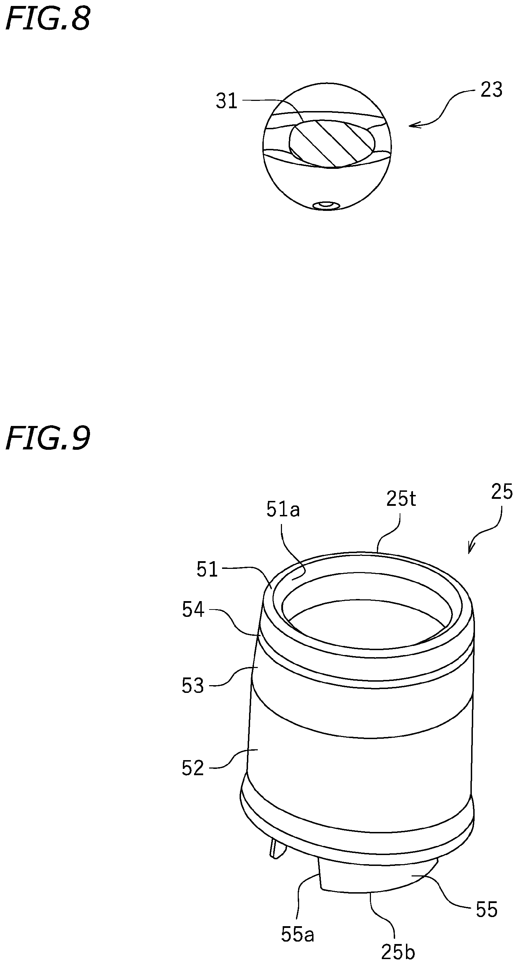

As shown in FIG. **3**, the mirror stay **23** includes a base portion **31** (see FIG. **4**) to which the adapter **24** is connected, a distal portion **32** connected to the mirror housing **22**, and a middle portion 33 located between the base portion **31** and the distal portion **32**. The middle portion **33** is inclined relative to the base portion **31**. FIG. **6** is a cross-sectional view taken along line VI-VI of FIG. **3**, showing the cross-sectional shape of the distal portion **32**. FIG. **7** is a cross-sectional view taken along line VII-VII of FIG. **3**, showing the cross-sectional shape of the middle portion **33**. FIG. **8** is a cross-sectional view taken along line VIII-VIII of FIG. **3**, showing the cross-sectional shape of the base portion **31**. As shown in FIG. **6** to FIG. **8**, the cross-sectional shape of the distal portion **32**, the cross-sectional shape of the middle portion **33**, and the cross-sectional shape of the base portion **31** are different from each other. Although there is no particular limitation, the cross-sectional shape of the distal portion **32** is herein a circular ring shape, and the cross-sectional shapes of the middle portion **33** and the base portion **31** are oblong circular shapes. The cross-sectional shape of the base portion **31** is an elliptical shape. The cross-sectional shape of the mirror stay **23** varies along the axial direction of the mirror stay **23**.

As shown in FIG. **5**, the adapter **24** includes a first male thread portion **24a**, a second male thread portion **24b** that is fixed to the base portion **31** of the mirror stay **23**, and a nut portion **24c**. Although not shown in the figures, a spiral thread groove is formed on the outer circumferential surface of the first male thread portion **24a** and the second male thread portion **24b**. The handle **11** includes a female thread portion **19** (see FIG. **2**) with a thread groove formed on the inner circumferential surface. The first male thread portion **24a** is screwed into the female thread portion **19** of the handle **11**. Thus, the adapter **24** is fixed to the handle **11**. The second male thread portion **24b** is screwed into the female thread portion **31b** formed on the base portion **31** of the mirror stay **23.** Thus, the mirror stay **23** is fixed to the adapter **24**. After adjusting the orientation of the side mirror **20**, the orientation of the side mirror **20** is fixed by tightening a nut **26** that engages with the first male thread portion **24a**. By tightening the nut **26**, the rotation of the side mirror **20** is restricted.

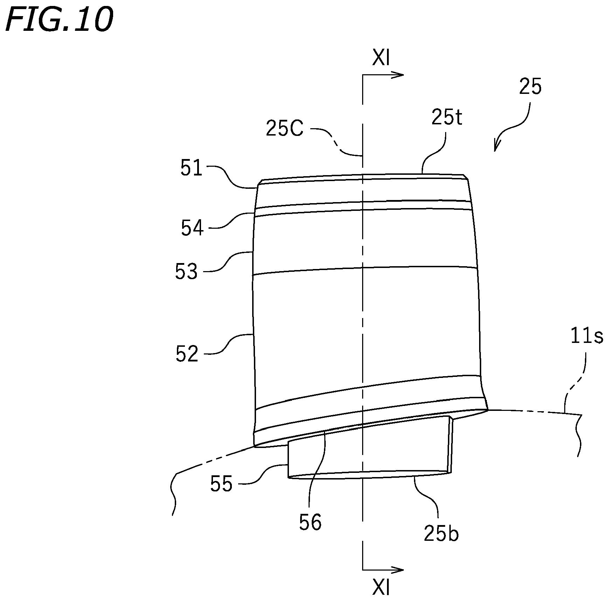

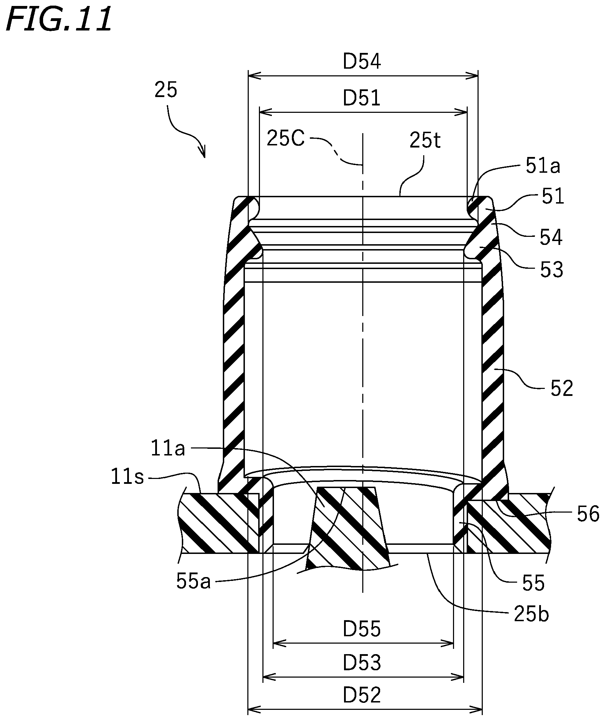

FIG. **9** is a perspective view of the cap **25**. FIG. **10** is a front view of the cap **25**. FIG. **11** is a cross-sectional view taken along line XI-XI of FIG. **10**. As shown in FIG. **9**, the cap **25** is formed in a cylindrical shape with a non-constant inner diameter. As shown in FIG. **11**, the cap **25** includes a base portion **25b**, a distal portion **25t**, a first tubular portion **51** provided in the distal portion **25t,** a second tubular portion **52**, a third tubular portion **53** located between the first tubular portion **51** and the second tubular portion **52**, a fourth tubular portion **54** located between the first tubular portion **51** and the third tubular portion **53**, and a fifth tubular portion **55** provided in the base portion **25b**.

The first tubular portion **51** includes a semi-circular portion **51a** protruding inward in the radial direction. The fifth tubular portion **55** includes a recessed portion **55a** recessed in a direction parallel to the axial direction **25C** of the cap **25.** In FIG. **11**, the recessed portion **55a** is recessed upward. The handle **11** includes a protruding portion **11a** that fits into the recessed portion **55a**. By fitting the recessed portion **55a** of the cap **25** into the protruding portion **11a** of the handle **11**, rotation of the cap **25** is restricted.

The cap **25** includes a bottom surface **56** provided between the second tubular portion **52** and the fifth tubular portion **55**. The bottom surface **56** extends in the radial direction and in the circumferential direction. The bottom surface **56** faces downward. As shown in FIG. **10**, the bottom surface **56** is inclined relative to the axial direction **25C** of the cap **25**. The handle **11** has an inclined upper surface **11s**. The cap **25** is attached so that the bottom surface **56** contacts the upper surface **118** of the handle **11**. By aligning the bottom surface **56** of the cap **25** with the upper surface **118** of the handle **11**, it is possible to prevent the cap **25** from rotating about the axis **25C**.

As shown in FIG. **11**, the first tubular portion **51** has a first inner diameter **D51**. Note that the inner diameter of a portion of the cap **25** means the inner diameter of that portion when the cap **25** is not elastically deformed. In other words, the inner diameter of a portion of the cap **25** means the inner diameter of that portion when nothing is inserted inside the cap **25**, as shown in FIG. **11**. Here, the inner diameter of a portion of the cap **25** means the inner diameter of that portion when the mirror stay **23** and the adapter **24** are not inserted into the cap **25**.

The first inner diameter **D51** is smaller than the outer diameter **D31** of the base portion **31** of the mirror stay **23** (see FIG. **5**). When the cap **25** is attached to the mirror stay **23**, the first tubular portion **51** is elastically deformed outward in the radial direction. As a result, the first tubular portion **51** tightly adheres to the mirror stay **23**.

The second tubular portion **52** has a second inner diameter **D52**. The second inner diameter **D52** is larger than the first inner diameter **D51**. The second inner diameter **D52** is larger than the outer diameter **D31** of the base portion **31** of the mirror stay **23**. The second inner diameter **D52** is larger than the outer diameter of the adapter **24**. As shown in FIG. **5**, a space is formed between the second tubular portion **52** and the adapter **24.**

As shown in FIG. **11**, the third tubular portion **53** has a third inner diameter D53 that is smaller than the second inner diameter **D52**. The fourth tubular portion **54** has a fourth inner diameter **D54** that is larger than the first inner diameter **D51** and larger than the third inner diameter **D53**. The fifth tubular portion **55** has a fifth inner diameter **D55** that is smaller than the second inner diameter **D52**.

The cap **25** improves the appearance of the base portion of the side mirror **20** by covering the connecting portion between the mirror stay **23** and the adapter **24** and the connecting portion between the adapter **24** and the handle **11**. The cap **25** covers those connecting portions to prevent water and dust from entering those connecting portions. When the side mirror **20** is detached from the handle **11**, the cap **25** is detached from around the adapter **24**.

When detaching the mirror stay **23** from the adapter **24** and when attaching the mirror stay **23** to the adapter **24**, the cap **25** is slid from the base portion **31** to the middle portion **33** of the mirror stay **23**, thereby exposing the adapter **24** as shown in FIG. 2. After the mirror stay **23** is attached to the adapter **24**, the cap **25** is slid from the middle portion **33** of the mirror stay **23** to the base portion **31** and placed over the adapter **24**. Thus, the connecting portion between the mirror stay **23** and the adapter **24** and the connecting portion between the adapter **24** and the handle **11** are now covered by the cap **25**.

As described above, the cross-sectional shape of the mirror stay **23** varies along the axial direction of the mirror stay **23**. Since the cap **25** is elastically deformable, when the cap **25** is moved along the axial direction of the mirror stay **23**, the cap **25** deforms conforming to the cross-sectional shape of the mirror stay **23**. However, if the cap **25** is formed by a cylinder with a constant inner diameter, it is difficult to move the cap **25** over a portion of the mirror stay **23** where the cross-sectional shape is non-circular. When the cap **25** is formed by a cylinder with a constant inner diameter, it is difficult to smoothly slide the cap **25** from the base portion **31** to the middle portion **33** along the axial direction of the mirror stay **23**. Therefore, in order to facilitate the movement of the cap **25**, one can consider increasing the inner diameter of the cap **25**. However, if the inner diameter of the cap **25** is large, the gap between the cap **25** and the mirror stay **23** becomes large. The gap becomes conspicuous, thereby detracting from the appearance. There is also a concern that water or dust may enter the inside of the cap **25** through the gap.

However, in the present embodiment, the inner diameter (i.e., the first inner diameter) **D51** of the first tubular portion **51** provided in the distal portion **25t** of the cap **25** is smaller than the outer diameter **D31** of the base portion **31** of the mirror stay **23**. Therefore, it is possible to decrease the gap between the mirror stay **23** and the cap **25**. This can prevent water or dust from entering the cap **25**, and also prevent the gap from becoming conspicuous. According to the present embodiment, the cap **25** includes the second tubular portion **52** having the inner diameter (i.e., the second inner diameter) **D52** larger than the inner diameter **D51** of the first tubular portion **51**. Therefore, when the cap **25** is moved along the axial direction of the mirror stay **23**, the cap **25** easily elastically deforms conforming to the cross-sectional shape of the mirror stay **23**. Therefore, it is easy to move the cap **25** along the mirror stay **23**. Therefore, according to the present embodiment, the gap between the mirror stay **23** and the cap **25** can be made inconspicuous, and it is easy to move the cap **25** along the mirror stay **23**.

According to the present embodiment, the inner diameter **D52** of the second tubular portion **52** is larger than the outer diameter **D31** of the base portion **31** of the mirror stay **23**. The inner diameter **D52** of the second tubular portion **52** is relatively large. Therefore, the cap **25** is more likely to deform when the cap **25** is moved along the mirror stay **23**. Since the cap **25** is likely to elastically deform to conform to the cross-sectional shape of the mirror stay **23**, it is easy to move the cap **25** along the mirror stay **23**.

According to the present embodiment, the cap **25** has the third tubular portion **53** located between the first tubular portion **51** and the second tubular portion **52**, wherein the inner diameter (third inner diameter) **D53** of the third tubular portion **53** is smaller than the inner diameter **D52** of the second tubular portion **52**. Since the cap **25** has the third tubular portion **53** in addition to the first tubular portion **51**, the gap between the mirror stay **23** and the cap **25** can be made even more inconspicuous. It is also possible to more reliably prevent water or dust from entering through the gap between the mirror stay **23** and the cap **25**.

There is a concern that with the cap **25** having the third tubular portion **53**, it may be difficult for the cap **25** to deform conforming to the cross-sectional shape of the mirror stay **23** as the cap **25** moves along the mirror stay **23**. However, according to the present embodiment, the cap **25** has the fourth tubular portion **54** located between the first tubular portion **51** and the third tubular portion **53**, and the inner diameter (fourth inner diameter) **D54** of the fourth tubular portion **54** is larger than the inner diameter **D51** of the first tubular portion **51** and the inner diameter **D53** of the third tubular portion **53**. Thus, it is possible to ensure a good deformability of the cap **25**. Thus, it is easy to move the cap **25** along the mirror stay **23**.

While there is no particular limitation on the longitudinal-sectional shape of the first tubular portion **51**, the first tubular portion **51** includes the semi-circular portion **51a** that is protruding inward in the radial direction in the present embodiment. When the cap **25** is moved along the mirror stay **23**, the semi-circular portion **51a** is unlikely to be caught against the outer circumferential surface of the mirror stay **23**. Thus, it is easier to move the cap **25** along the mirror stay **23**.

According to the present embodiment, the cap **25** has the fifth tubular portion **55** provided in the base portion **25b**. The fifth tubular portion **55** has the recessed portion **55a**. By engaging the recessed portion **55a** with the protruding portion **11a** (see FIG. **11**) of the handle **11**, it is possible to prevent the cap **25** from rotating. It is possible to more reliably prevent the cap **25** from being detached after the cap **25** is attached.

According to the present embodiment, the cap **25** has the bottom surface **56** provided between the second tubular portion **52** and the fifth tubular portion **55**. The bottom surface **56** extends in the radial direction and in the circumferential direction. The bottom surface **56** is inclined relative to the axial direction **25C** of the cap **25** (see FIG. **10**). By bringing the bottom surface **56** into contact with the inclined upper surface **118** of the handle **11**, it is possible to prevent the cap **25** from rotating. This also makes it possible to more reliably prevent the cap **25** from coming off after the cap **25** is attached.

While one embodiment has been described above, the embodiment described above is merely illustrative, and various other embodiments are possible.

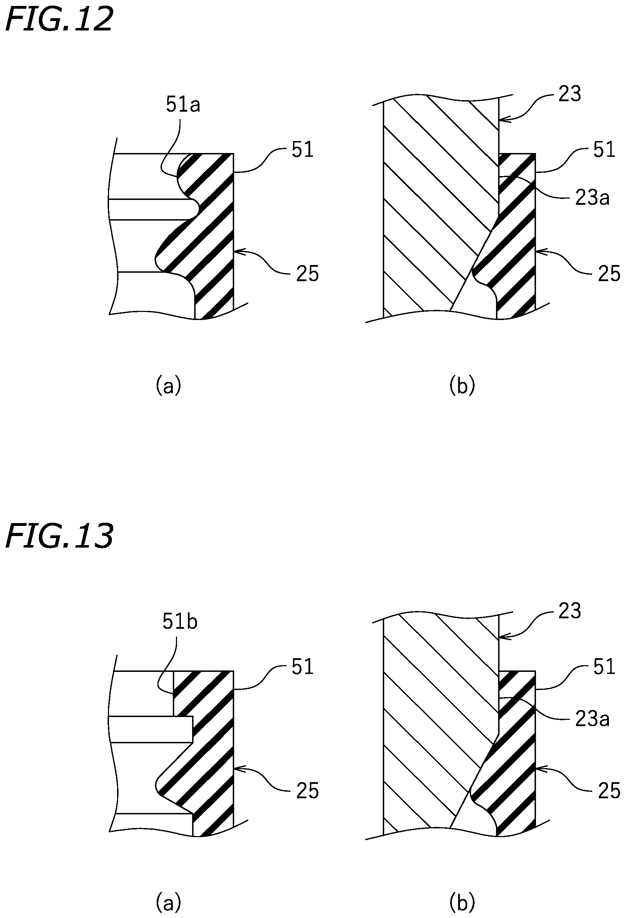

FIG. 12(a) and FIG. 12(b) are schematic diagrams of the embodiment described above. FIG. 12(a) is a partial cross-sectional view of the cap **25** before the cap **25** is placed over the mirror stay **23** and the adapter **24.** FIG. 12(b) is a partial cross-sectional view of the cap **25** and the mirror stay **23** when the cap **25** is placed over the mirror stay **23** and the adapter **24**. When the cap **25** is placed over the mirror stay **23**, the cap **25** elastically deforms. As shown in FIG. 12(a), in the embodiment described above, the first tubular portion **51** of the cap **52** includes the semi-circular portion **51a** protruding inward in the radial direction.

FIG. 13(a) and FIG. 13(b) are equivalent to FIG. 12(a) and FIG. 12(b) for another embodiment. As shown in FIG. 13(a), the first tubular portion **51** may include a rectangular portion **51b** protruding inward in the radial direction, instead of the semi-circular portion **51a**. The sectional shape of the rectangular portion **51b** is formed in a rectangular shape.

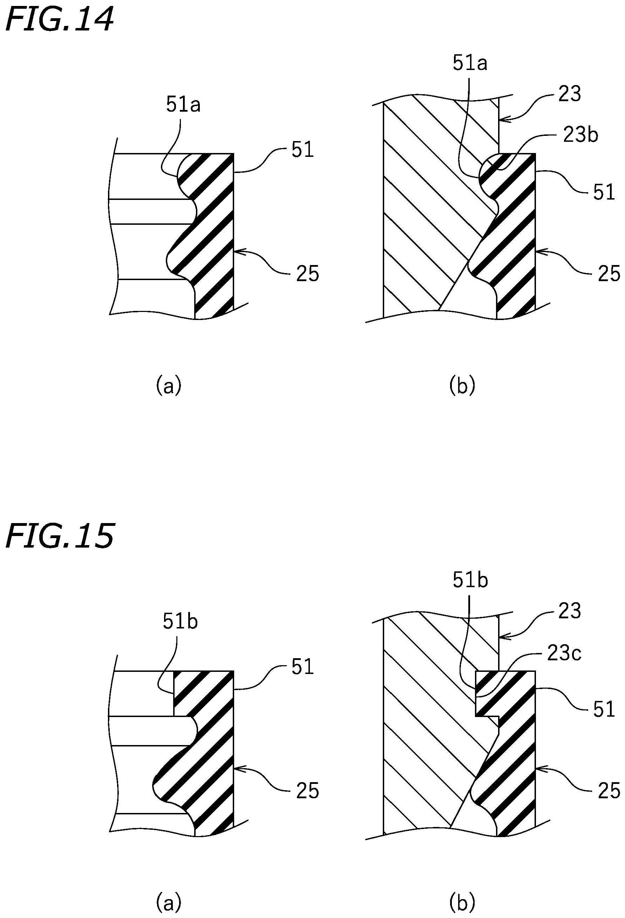

FIG. 14(a) and FIG. 14(b) are equivalent to FIG. 12(a) and FIG. 12(b) for another embodiment. As shown in FIG. 14(b), a groove **23b**, into which at least a portion of the semi-circular portion **51a** of the first tubular portion **51** is inserted, may be formed on the outer circumferential surface of the mirror stay **23**. The sectional shape of the groove **23b** may be formed in a semi-circular shape.

FIG. 15(a) and FIG. 15(b) are equivalent to FIG. 12(a) and FIG. 12(b) for another embodiment. As shown in FIG. 15(b), a groove **23c** having a rectangular cross-sectional shape, into which at least a part of the rectangular portion **51b** of the first tubular portion **51** is inserted, is formed on the outer circumferential surface of the mirror stay **23**.

Thus, a groove, into which a part of the cap **25** is inserted, may be formed on the outer circumferential surface of the mirror stay **23**. Note that the sectional shape of the first tubular portion **51** is not limited to a semi-circular shape or a rectangular shape.

Although the inner diameter **D52** of the second tubular portion **52** of the cap **25** is larger than the outer diameter **D31** of the base portion **31** of the mirror stay **23** in the embodiment described above, the inner diameter **D52** of the second tubular portion **52** may be less than or equal to the outer diameter **D31** of the base portion **31** of the mirror stay **23**. The third tubular portion **53** may be absent. The fourth tubular portion **54** may be absent.

The fifth tubular portion **55** does not need to have the recessed portion **55a**, which is recessed in the direction parallel to the axial direction **25C** of the cap **25**. The bottom surface **56** of the cap **25** does not need to be inclined relative to the axial direction **25C** of the cap **25**. The inner diameter **D55** of the fifth tubular portion **55** may be equal to or greater than the inner diameter **D52** of the second tubular portion **52**.

A straddled vehicle refers to a vehicle that is straddled by a rider. The straddled vehicle is not limited to the motorcycle **1**. The straddled vehicle may be an auto tricycle, an ATV (All Terrain Vehicle), or a snowmobile, for example.

### Reference Signs List

1: Motorcycle (straddled vehicle), 11: Handle, 20: Side mirror, 21: Mirror, 22: Mirror housing, 23: Mirror stay, 24: Adapter, 25: Cap, 25b: Base portion, 25t: Distal portion, 31: Base portion, 32: Distal portion, 33: Middle portion, 51: First tubular portion, 51a: Semi-circular portion, 52: Second tubular portion, 53: Third tubular portion, 54: Fourth tubular portion, 55: Fifth tubular portion, 55a: Recessed portion, 56: Bottom surface

## Claims

1. A side mirror **(20)** comprising:
a mirror housing **(22)** to which a mirror **(21)** is attached;
a rod-shaped mirror stay **(23)** that supports the mirror housing **(22)**;
an adapter **(24)** that connects together the mirror stay **(23)** and a handle **(11)**;
an elastically deformable tubular cap **(25)** into which the mirror stay **(23)** and the adapter **(24)** are inserted, wherein the cap **(25)** covers the adapter **(24)**, wherein:
the mirror stay **(23)** includes a base portion **(31)** to which the adapter **(24)** is connected, a distal portion **(32)** connected to the mirror housing **(22)**, and a middle portion **(33)** located between the base portion **(31)** and the distal portion **(32)**;
a cross-sectional shape of the middle portion **(33)** of the mirror stay **(23)** is different from a cross-sectional shape of the base portion **(31)**;
the cap **(25)** includes a base portion **(25b),** a distal portion **(25t)** located closer to the mirror stay **(23)** than the base portion **(25b)**, a first tubular portion **(51)** having a first inner diameter **(D51)** provided in the distal portion **(25t)**, and a second tubular portion **(52)** having a second inner diameter **(D52)** larger than the first inner diameter **(D51)**; and
the first inner diameter **(D51)** is smaller than an outer diameter **(D31)** of the base portion **(31)** of the mirror stay **(23)**.

2. The side mirror **(20)** according to claim 1, wherein the second inner diameter **(D52)** is larger than the outer diameter **(D31)** of the base portion **(31)** of the mirror stay **(23)**.

3. The side mirror **(20)** according to claim 1 or 2, wherein the cap **(25)** includes:
a third tubular portion **(53)** that is located between the first tubular portion **(51)** and the second tubular portion **(52)** and that has a third inner diameter **(D53)** smaller than the second inner diameter **(D52)**; and
a fourth tubular portion **(54)** that is located between the first tubular portion **(51)** and the third tubular portion **(53)** and that has a fourth inner diameter **(D54)** larger than the first inner diameter **(D51)** and larger than the third inner diameter **(D53)**.

4. The side mirror **(20)** according to any one of claims 1 to 3, wherein the first tubular portion **(51)** includes a semi-circular portion **(51a)** protruding inward in a radial direction.

5. The side mirror **(20)** according to any one of claims 1 to 4, wherein:
the cap **(25)** includes a fifth tubular portion **(55)** provided in the base portion **(25b)**; and
the fifth tubular portion **(55)** includes a recessed portion **(55a)** that is recessed in a direction parallel to an axial direction **(25C)** of the cap **(25)**.

6. The side mirror **(20)** according to any one of claims 1 to 4, wherein:
the cap **(25)** includes a fifth tubular portion **(55)** provided in the base portion **(25b)**, and a bottom surface **(56)** provided between the second tubular portion **(52)** and the fifth tubular portion **(55)** and extending in a radial direction and in a circumferential direction; and
the bottom surface **(56)** is inclined relative to an axial direction **(25C)** of the cap **(25)**.

7. The side mirror **(20)** according to claim 5 or 6, wherein an inner diameter **(D55)** of the fifth tubular portion **(55)** is smaller than the second inner diameter **(D52)**.

8. The side mirror **(20)** according to any one of claims 1 to 7, wherein the cap **(25)** is made of rubber.

9. The side mirror **(20)** according to any one of claims 1 to 8, wherein a cross-sectional shape of the middle portion **(33)** of the mirror stay **(23)** is an oblong circular shape.

10. A straddled vehicle **(1)** comprising the side mirror **(20)** according to any one of claims 1 to 9.
